# EUROPÄISCHE PATENTSCHRIFT

(11) **EP 2 717 592 B1**
(45) Veröffentlichungstag und Bekanntmachung des Hinweises auf die Patenterteilung: **06.04.2016**
(21) Anmeldenummer: 12187433.3
(22) Anmeldetag: 05.10.2012
(51) Int. Cl.: H04Q 11/00

(54) **Verfahren zum Betreiben eines optischen Netzes**
Method for operating an optical network
Procédé de fonctionnement d'un réseau optique

(43) Veröffentlichungstag der Anmeldung: 09.04.2014
(73) Patentinhaber: Deutsche Telekom AG, 53113 Bonn (DE)
(72) Erfinder: Bunge, Christian-Alexander, 12157 Berlin (DE); Jamshidi, Kambiz, 04277 Leipzig (DE)
(74) Vertreter: Braun-Dullaeus, Karl-Ulrich

(56) Entgegenhaltungen:
- WO-A1-2012/034385
- US-B1- 7 389 528

## Beschreibung

Die Erfindung ist insbesondere anwendbar bei sogenannten passiven optischen Netzen (PON), bei denen hinter der Datenverteilungsstelle zumindest ein passiver Signalsplitter angeordnet ist, der ohne eine eigene Stromversorgung auskommt. Der passive Signalsplitter ist vorgesehen, um ein eingehendes Datensignal in mehrere ausgehende Datenströme aufzuteilen, so dass die Daten durch mehrere Datenempfänger gleichzeitig empfangen werden können. Im Gegensatz dazu weist ein aktives optisches Netz solche Splitter auf, die die Daten aktiv auf einzelne Datenempfänger verteilen und dabei insbesondere nur solche Daten an einen bestimmten Datenempfänger leiten, welche auch explizit für diesen Datenempfänger bestimmt sind.

Der Energieverbrauch eines optischen Netzes wird immer mehr zu einem wichtigen Thema. Dies ist auch dadurch bedingt, dass in einem optischen Netz eine überaus große Zahl an Komponenten angeschlossen werden können, und dass der Kostendruck für den Betrieb der Komponenten beträchtlich ist. Es ist daher ein wesentlicher Aspekt bei der Entwicklung von optischen Netzen, dass diese möglichst energiesparend und damit auch kostengünstig zu betreiben sind.

Hauptverbindungen zwischen einzelnen Vermittlungsstellen werden häufig als Punkt-zu-Punkt-Verbindungen ausgeführt, wobei diese Verbindung einem ständigen Datenstrom zwischen den einzelnen Anschlussstellen ausgesetzt sind. Ein Zugangsnetz, für das die Erfindung in besonderem Maße geeignet ist, nämlich ein solches, bei dem auch Heimanschlüsse oder Nutzeranschlüsse direkt angeschlossen werden können, verfügt hingegen über eine enorme Anzahl von Verbindungsstellen, die nur zeitweilig die verfügbare Datenverbindung auch wirklich nutzen. Ein privater Internetanschluss wird beispielsweise vermehrt am Abend genutzt, während er ansonsten lediglich in Bereitschaft ist; dennoch muss der Internetanschluss auch in den anderen Stunden stets darauf gefasst sein, mögliche Anfragen aus dem Netz entgegennehmen zu müssen. Dies trifft natürlich auch in zeitlich kürzeren Rahmen zu, wenn zwar der Internetanschluss aktiv genutzt wird, dennoch immer mal wieder einzelne Sekunden oder Minuten bzw. Bruchteile davon vergehen, ohne dass tatsächlich ein Datenverkehr mit dem Endgeräteanschluss stattfindet.

In passiven sternförmigen Zugangsnetzen wird von einem zentralen Datenverteiler ein Datenstrom stets an alle Datenempfänger gesendet; die einzelnen Datenempfänger entscheiden dann selbständig, ob der Datennutzstrom (oder einzelne Nutzpakete dieses Datenstroms) für sie bestimmt ist oder nicht. Die Wahrscheinlichkeit, dass ein Datenpaket aber für einen einzelnen Datenempfänger bestimmt ist, sinkt zunehmend mit der Zahl der im Netz vorhandenen Datenempfänger. Dennoch müssen alle Datenempfänger stets in der Lage sein, Datennutzsignale zu empfangen.

Die passiven optischen Netze werden vermehrt eingesetzt, da die anfallenden Betriebskosten für den Netzbetreiber häufig günstiger sind als die Betriebskosten von aktiven optischen Netzen; davon ausgenommen können die Kosten des Energieverbrauchs sein, die den Inhabern der Datenempfänger entstehen, also insbesondere die Inhaber eines privaten optischen Internetanschlusses.

Die EP 2 104 250 A1 befasst sich mit einem passiven optischen Netz. Es wird ein optisches Aufwecksignal an eine Vielzahl von Überwachungseinheiten übermittelt, wobei die Überwachungseinheiten jeweils einem Datenempfänger zugeordnet sind. Das Aufwecksignal ist aber nicht speziell für eine einzelne Überwachungseinheit vorgesehen, so dass alle Überwachungseinheiten aufgrund des Aufwecksignals aus einem Schlafmodus in einen Empfangsmodus überführt werden. Anschließend wird eine Informationsanfrage an die Überwachungseinheiten gesendet. Eine der Überwachungseinheiten fühlt sich dann durch die Informationsanfrage angesprochen und sendet eine Antwort an die zentrale Datenverteilungsstelle.

Die EP 2 552 084 A1 offenbart ein ebenfalls optisches Netz der gattungsgemäßen Art. Zur Energeieinsparung werden die Datenempfänger in eine Art Tiefschlafmodus überführt, in dem ein Empfang und Senden von optischen Signalen nicht möglich ist. Zur Überprüfung, ob ein Datenempfänger für einen Empfang von optischen Signalen vorgesehen ist, wird dieser Datenempfänger regelmäßig in eine Art Halbschlaf überführt, in der der Datenempfänger für einen optischen Aufweckbefehl empfangsbereit ist. Nun müssen allerdings eingehende optische Signale empfangen und informationstechnisch ausgewertet werden. Wird der empfängerspezifische Aufweckbefehl nicht innerhalb einer vorgegebenen Zeit erkannt, wird der Datenempfänger aus dem Halbschlaf wieder für eine festgelegte Zeitspanne in den Tiefschlaf versetzt.

Es ist Aufgabe der vorliegenden Erfindung, ein verbessertes Verfahren zum Betreiben eines optischen Netzes, insbesondere eines passiven optischen Netzes bereit zu stellen. Die der Erfindung zugrunde liegende Aufgabe wird gelöst durch ein Verfahren nach Anspruch 1; bevorzugte Ausgestaltung ergeben sich aus den Unteransprüchen.

Der Kern der Erfindung liegt insbesondere darin, dass ein spezielles optisch kodiertes Aufwecksignal gleichzeitig an mehrere, insbesondere an alle Aufweckeinheiten im Netz, gesendet wird, die jeweils einem Datenempfänger zugeordnet sind. Dabei kann es durchaus möglich sein, dass eine Aufweckeinheit für mehrere Datenempfänger zuständig ist. Jede einzelne Aufweckeinheit kann dann überprüfen, ob das Aufwecksignal für einen Datenempfänger bestimmt ist, der dieser Aufweckeinheit zugeordnet ist. Das Besondere ist nun, dass die Aufweckeinheit eine Filtereinheit aufweist, die rein passiv funktioniert und das optische Signal dekodieren kann bzw. derart modifizieren kann, dass es von einem nachgeordneten lichtempfindlichen Sensor erkannt werden kann. Dem lichtempfindlichen Sensor kann eine Schwellwertschaltung zugeordnet sein, so dass erst eine bestimmte Intensität des auf den lichtempfindlichen Sensor auftreffenden Lichtsignals auch tatsächlich einen Aufweckbefehl erzeugt, der dann an einen zugeordneten Datenempfänger ausgegeben werden kann. Der Vorteil liegt nun darin, dass es durch ein derartiges Verfahren ermöglicht wird, dass die Filtereinheit keine externe Energiezufuhr benötigt und damit im Wesentlichen keine Standbykosten verursacht. Der lichtempfindliche Sensor kann mit einem (wenn überhaupt) sehr geringem Energieaufwand in ständiger Bereitschaft gehalten werden; insbesondere wartet der lichtempfindliche Sensor stets darauf, ob von der Filtereinheit das modifizierte Aufwecksignal ausgegeben wird. Im einfachsten Fall kann der lichtempfindliche Sensor eine Photovoltaikzelle sein, die vollständig ohne zusätzliche externe Energie auskommt. Sobald ein Licht von gewisser Intensität auf die Photovoltaikzelle auftrifft, wird ein Strom ausgegeben oder eine Spannung erzeugt. Ist dieser Strom bzw. die Spannung dann größer als ein vorgegebener Grenzwert, so stellt der Strom bzw. die Spannung selbst den Aufweckbefehl dar. Eine Schnittstelle des Datenempfängers erkennt dann diesen Aufweckbefehl und kann den Datenempfänger vom Schlafmodus in den Bereitschaftsmodus schalten, sofern der Datenempfänger denn zuvor im Schlafmodus war. In gleicher Art kann dieser Datenempfänger auch wieder in den Schlafmodus versetzt werden.

Das Verfahren zum Aufwecken kann dabei vollständig ohne informationstechnische Aufarbeitung des Aufwecksignals auskommen. Im Gegensatz zu herkömmlichen Anwendungen, in denen stets das optische Signal zunächst datentechnisch zu analysieren ist, ob denn in dem optischen Signal ein relevanter Aufweckbefehl versteckt ist, kann das Erkennen des Aufwecksignals nun von jeder einzelnen Aufweckeinheit rein passiv durchgeführt werden, was den Energiebedarf der Anordnung aus Aufweckeinheit und Datenempfänger im Schlafmodus enorm reduziert.

Besonders bevorzugt ist es, wenn die Filtereinheit im Betrieb ohne den zusätzlichen Einsatz von externer Energie auskommt; selbstverständlich davon ausgenommen ist die Lichtenergie des optischen Datenstroms, die sowieso durch die optische Leitung auf die Filtereinheit trifft. Dabei ist es besonders bevorzugt, wenn die zur Erzeugung des Aufweckbefehles erforderliche Energie vollständig dem optisch modifizierten Aufwecksignal entnommen wird.

Sollte beispielsweise wie beschrieben die Umwandlung von optischem Aufwecksignal in den elektrischen oder in elektronischen Aufweckbefehl mit Hilfe einer Photovoltaikzelle erfolgen, so wird die elektrische Energie des Aufweckbefehls vollständig durch Umwandlung der optischen Energie des optischen Aufwecksignals erzeugt.

In einer bevorzugten Ausgestaltung gibt die Filtereinheit derjenigen Aufweckeinheit, die dem bestimmten Datenempfänger des Aufwecksignals zugeordnet ist, ein modifiziertes Aufwecksignal aus, welches zumindest temporär eine höhere Amplitude aufweist, als die von anderen Filtereinheiten modifizierten Aufwecksignale desselben ursprünglichen Aufwecksignals. Falls sich eine der Aufweckeinheiten durch das Aufwecksignal "angesprochen fühlt", erzeugt diese angesprochene Filtereinheit aus dem Aufwecksignal ein solches modifiziertes Aufwecksignal, welches sich in der Lichtintensität von dem ursprünglichen Aufwecksignal unterscheidet, nämlich durch eine höhere Lichtintensität. Hierzu können beispielsweise ein Faser-Bragg-Gitter, insbesondere ein super strukturiertes Faser-Bragg-Gitter, und/oder optische Verzögerungsstrukturen verwendet werden. Der lichtempfindliche Sensor ist dann auf die temporär höhere Amplitude des modifizierten Aufwecksignals konditioniert und kann dann den entsprechenden Aufweckbefehl ausgeben. Also nur wenn das modifizierte optische Signal über die erhöhte Intensität verfügt, wird ein vorgegebener Schwellwert auch erreicht, so dass ein valider Aufweckbefehl erzeugt werden kann, insbesondere ohne den Einsatz externer Energie. Damit kann sicher gestellt werden, dass der optische Sensor zwar auf das modifizierte optische Signal anspringt, nicht aber auf jegliche Aufwecksignale, die von der Datenverteilungsstelle ausgesendet werden. Mit anderen Worten ist die Filtereinheit in dieser Ausgestaltung eine Art temporärer optischer Verstärker, der nur dann eine Verstärkung erzeugt oder bewirkt, wenn das auftreffende Aufwecksignal auch tatsächlich für den zugehörigen Datenempfänger bestimmt ist

In einer alternativen Ausgestaltung ist die Filtereinheit eine wellenlängenselektive Filtereinheit. Die für die unterschiedlichen Aufweckeinheiten vorgesehenen Aufwecksignale werden dann durch unterschiedliche Wellenlängen individualisiert. So kann die wellenlängeselektive Filtereinheit einen Signalsplitter und einen nachgelagerten Wellenlängenfilter umfassen oder einen wellenlängenselektiven Splitter umfassen. Jedem Datenempfänger wird damit ein optisches Aufwecksignal mit einer speziellen Frequenz zugewiesen. Der Filter lässt dann nur solche Aufwecksignale zu der jeweiligen Aufweckeinheit und dem optischen Sensor gelangen, welche für den jeweiligen Datenempfänger auch bestimmt sind. Dann kann der optische Sensor wie oben beschrieben erkennen, dass ein Lichtsignal mit einer entsprechenden Amplitude auf ihn auftrifft. Sollte die Lichtintensität eine gewisse Stärke aufweisen, so dass ein Schwellwert überschritten ist, so wird der Aufweckbefehl an den Datenempfänger ausgegeben. Beide beschriebenen Verfahren können auch kombiniert werden, um die Zahl der zu unterscheidenden Datenempfänger weiter zu erhöhen.

Als mögliche Filtereinheiten eignen sich grundsätzlich ein Faser-Bragg-Gitter, eine Verzögerungsstruktur (delay-line interferometer) oder andere optische Strukturen mit endlicher, teilweise auch unendlicher Impulsantwort (FIR- bzw. IIR-Filter).

In einer bevorzugten Weiterbildung kann das für einen bestimmten Datenempfänger bestimmte Aufwecksignal zeitgleich zu einem Datennutzsignal gesendet wird, welches zum Empfang durch einen anderen Datenempfänger vorgesehen ist. Dabei kann das Aufwecksignal auf einer Frequenz gesendet werden, die ausschließlich diesem Aufwecksignal vorbehalten ist. Insofern wird das Netz nicht durch das Versenden des Aufwecksignals vollständig blokiert, sondern kann durchgehend weiter für den Versand der Datennutzsignale verwendet werden.

Die Erfindung betrifft ferner ein Datennetz, insbesondere ein optisches Datennetz, welches mittels eines Verfahrens der vorgenannten Art betrieben wird. Das betreffende Datennetz ist insbesondere ein passives optisches Datennetz, insbesondere ein sternförmiges Datennetz.

Die Erfindung wird anhand der Figuren nachfolgend näher erläutert:
- Figur 1: die Struktur eines bekannten passiven optischen Netzes (PON);
- Figur 2: die Struktur eines erfindungsgemäß betriebenen optischen Netzes;
- Figur 3: Einzelheiten einer Aufweckeinheit in dem Netz nach Figur 2 in einer ersten Ausgestaltung;
- Figur 4: Einzelheiten einer Aufweckeinheit in dem Netz nach Figur 2 in einer zweiten Ausgestaltung;

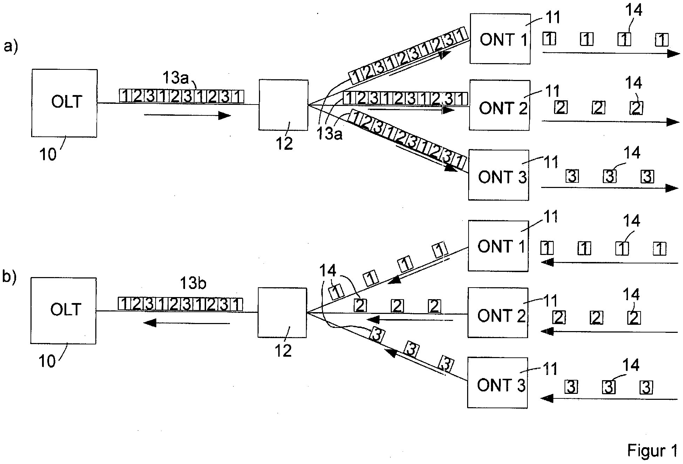

In Figur 1 ist die Struktur eines bekannten passiven optischen Netzes PON dargestellt. Eine Datenverteilungsstelle (optical line termination OLT) 10 stellt einen zentralen Punkt in dem optischen sternförmigen Datennetzes dar. Daten können von dieser Datenverteilungsstelle an eine Vielzahl von Datenempfänger (optical network termination ONT) 11 gesendet bzw. von dort empfangen werden. Dafür sind optische Lichtleiter zwischen der Datenverteilungsstelle 10 und den Datenempfängern 11 vorgesehen. Die einzelnen Datenempfänger 11 sind über einen gemeinsamen Splitter 12 mit der Datenverteilungsstelle 10 verbunden.

In Figur 1 ist gezeigt, wie ein Datenstrom 13a von der zentralen Datenverteilungsstelle 10 zu den einzelnen Datenempfängern 11 übermittelt wird. Zunächst wird der gesamte ausgehende Datenstrom 13a von der zentralen Datenverteilungsstelle 10 zum Splitter 12 gesendet. Der Splitter 12 teilt den Datenstrom 13a auf, so dass der gesamte Datenstrom 13a an alle einzelnen Datenempfänger 11 weitergeleitet wird. Die einzelnen Datenempfänger 11 können dann entscheiden, welche der einzelnen Datennutzsignale in Form von Datennutzpaketen 14 im Datenstrom 13 für sie relevant sind. So beachtet der Datenempfänger 11 lediglich die mit der Ziffer 1 bezeichneten Datennutzpakete 14, während der zweite Datenempfänger lediglich die mit der Ziffer 2 bezeichneten Datennutzpakete 14 beachtet. Die einzelnen Datenempfänger 11 müssen natürlich stets damit rechnen, dass der Datenstrom 13a einzelne Pakete 14 beinhaltet, die für Sie bestimmt sind. In den Pausen zwischen den einzelnen für den jeweiligen Datenempfänger 11 bestimmten Datennutzpaketen 14 kann allerdings der Datenempfänger in einen Schlafmodus versetzt werden, in dem deutlich Energie gespart werden kann. Der Datenempfänger 11 muss aber wieder rechtzeitig in einen Empfangsmodus überführt werden, wenn in dem Datenstrom 13a Datennutzpakete 14 vorhanden sind, die für den jeweiligen Datenempfänger 11 bestimmt sind. In diesem Empfangsmodus verbraucht der Datenempfänger 11 mehr Energie als im Schlafmodus.

In Figur 1b ist noch visualisiert, wie ein Datenfluss umgekehrt von den einzelnen Datenempfängern 11 zu der zentralen Datenverteilungsstelle 10 erfolgt. Die einzelnen Datennutzpakete 14 werden dabei zu jeweils unterschiedlichen Zeitpunkten in Richtung zum Splitter 12 gesendet. Der Splitter 12 fügt dann die von den einzelnen Datenempfängern stammenden Datennutzpakete 14 zu einem eingehenden Datenstrom 13b zusammen, der dann an die zentrale Datenverteilungsstelle 10 geleitet wird.

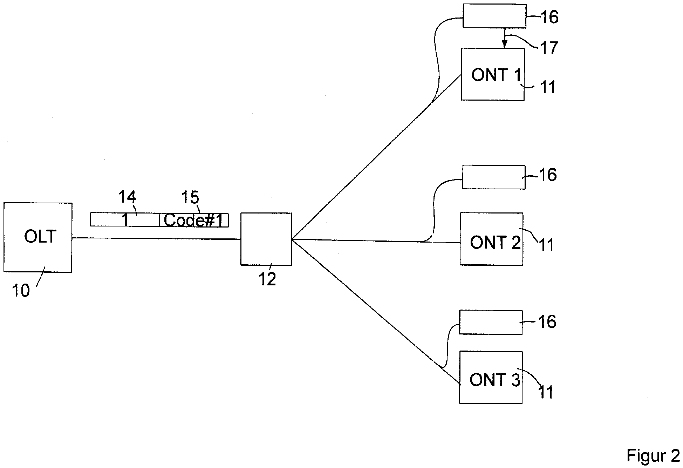

In der Figur 2 ist ein passives optisches Netz gezeigt, welches durch ein erfindungsgemäßes Verfahren betrieben wird. Das optische Netz weist wie das bekannte Netz nach Figur 1 die zentrale Datenverteilungsstelle 10, einen passiven Splitter 12 sowie mehrere Datenempfänger 11 auf. Jedem Datenempfänger 11 ist nun eine Aufweckeinheit 16 zugeordnet, die ebenfalls an die Datenleitung angeschlossen ist. Ein mit der Ziffer 1 versehendes Datennutzpaket 14 ist für den ersten Datenempfänger ONT 1 bestimmt. Dem Datennutzpaket 14 vorgeschaltet bzw. auch einer speziellen weiteren Wellenlänge parallel gesendet ist ein optischer Aufweckcode 15 als Aufwecksignal, das über dieselbe optische Leitung versendet wird, über die auch das Datennutzsignal 14 versendet wird. Alternativ kann das Aufwecksignal auch parallel gesendet werden, z.B. mit einer anderen Wellenlänge. Die Aufweckeinheit 16, die dem ersten Datenempfänger ONT 1 zugewiesen ist, erkennt das Aufwecksignal 15 als für sie bestimmt und gibt daraufhin den Aufweckbefehl 17 an den ersten Datenempfänger 11 aus, der dann vom Schlafmodus in den Empfangsmodus wechselt. Die anderen Aufweckeinheiten 16 geben keinen Aufweckbefehl aus. Somit bleiben die anderen Datenempfänger ONT 2 und ONT 3 im Schlafmodus. Es ist ersichtlich, dass für den Fall, dass mehrere hundert Datenempfänger 11 in einem Netz vorgesehen sind, alle Datenempfänger 11 bis auf einen im Schlafmodus verbleiben können, was eine enorme Energieeinsparung bedeuten wird.

Sollten die anderen Datenempfänger durch einen vorherigen Aufweckbefehl aufgeweckt sein, so kann zeitgleich zum Aufwecksignal 15, welches für den Datenempfänger ONT 1 bestimmt ist, ein Datennutzpaket 14 an einen (odere mehrere) der anderen Datenempfänger ONT 2, ONT 3 gesendet werden und von diesen empfangen werden.

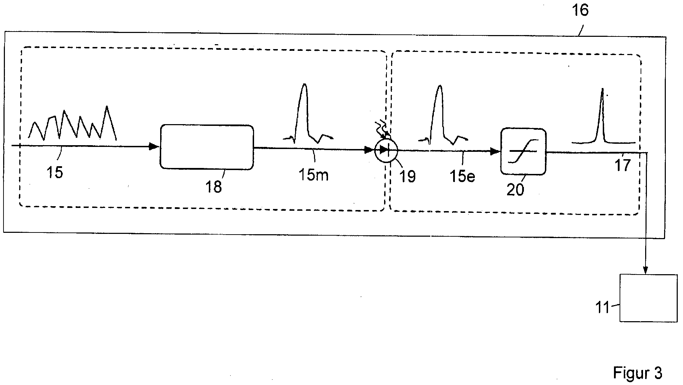

In Figur 3 ist ein beispielhafter Aufbau der Aufweckeinheit 16 in einer ersten Ausgestaltung näher gezeigt. Ein optisches Aufwecksignal 15 trifft auf die Aufweckeinheit 16. Ein optischer Filter 18 innerhalb der Aufweckeinheit 16 modifiziert das Aufwecksignal 15 zu einem modifizierten optischen Aufwecksignal 15m. Bei der Filtereinheit 18 kann es sich um ein Faser-Bragg-Gitter handeln, welches ohne externe Energiezufuhr auskommt. Bei einer bestimmten vorgegebenen Signalfolge wird dabei das optische modifizierte Signal 15m derart erzeugt, dass es eine temporär eine höhere Amplitude aufweist, als das ursprüngliche optische Aufwecksignal 15. Das modifizierte optische Aufwecksignal 15m trifft dann auf eine Fotodiode 19, die ein elektrisches Aufwecksignal 15e analog zum optischen Signal ausgibt. Eine Schwellwertschaltung 20 erkennt, ob das elektrische Signal 15e eine gewisse Intensität, beispielsweise eine gewisse Stromstärke oder Spannung, aufweist und lässt dann ggf. einen Stromfluss als elektrisches Aufwecksignal 15e passieren, was dann den Aufweckbefehl 17 darstellt.

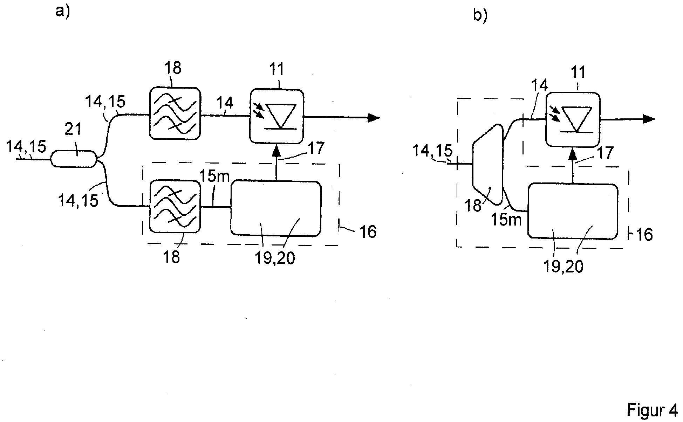

In Figur 4 ist eine alternative Ausgestaltung der Aufweckeinheit gezeigt. In Figur 4a ist ein optischer Energiesplitter 21 vorgesehen, der die Energie des eintreffenden Lichtsignals 14, 15 aufteilt; ein Teil wird in Richtung zur Aufweckeinheit 16 geleitet, der andere Teil wird zum zugeordneten Datenempfänger 11 geleitet. In beiden Teilen sind aber alle Informationen des auftreffenden Lichtstrahls 13 enthalten.

Das Lichtsignal 14, 15 (Datennutzsignal und Aufwecksignal) wird in beiden Kanälen dann durch einen Wellenlängenfilter 18 gefiltert; so bleibt innerhalb der Aufweckeinheit 16 nur noch das modifizierte Aufwecksignal 15m übrig, welches an die Fotodiode 19 und die Schwellwertschaltung 20 weitergeleitet wird, die im Wesentlichen analog zur Figur 3 ausgestaltet sein können. Es treffen also sämtliche Aufweckbefehle 15 zunächst auf die Filtereinheit 18 auf, wobei nur diejenigen Aufwecksignale 15m aufgrund deren spezifischer Wellelänge durchgelassen werden, die auch für den entsprechenden Datenempfänger 11 vorgesehen sind. Sollte dann durch die Fotodiode und die Schwellwertschaltung ein Stromfluss mit einer gewissen Mindeststromstärke erzeugt werden, so stellt dies den Aufweckbefehl 17 dar, der an den Datenempfänger 11 weitergeleitet wird.

Auch dem Datenempfänger 11 ist ein wellenlängenselektiver Filter 18 vorgeschaltet, der allerdings für die Funktionsweise der Aufweckeinheit 16 nicht von Bedeutung ist. Vielmehr wird im vorliegenden Fall sichergestellt, dass nur Datennutzpakete 14 und nicht noch das Aufwecksignal zum Datenempfänger 11 durchgelassen werden.

In Figur 4b ist eine Abwandlung der Anordnung nach Figur 4a gezeigt. Anstatt des Energiesplitters 21 wird ein wellenlängenselektiver Filter 18 zur Aufteilung der eintreffenden Lichtstrahlen 14, 15 verwendet. Hierdurch wird das modifizierte Aufwecksignal 15m, welches durch Filterung des ursprünglichen Aufwecksignals 15 nach der Wellenlänge erhalten wird, zur Fotodiode 19 und zur Schwellwertschaltung 20 weitergeleitet, die ebenfalls analog zur Figur 3 ausgestaltet sein können. Die Datennutzpakete 14 werden nur zum Datenempfänger 11 weitergeleitet, der bei Bedarf durch den Aufweckbefehl 17 in den Empfangsmodus überführt wird. Auch die wellenlängenselektiven Filter 18 nach den Figuren 4a und 4b benötigen für den Betrieb keine zusätzliche externe Energie.

### Bezugszeichenliste

- 10: Datenverteilungsstelle
- 11: Datenempfänger
- 12: Splitter
- 13: Datenstrom
- 14: Datennutzpaket
- 15: Aufwecksignal
- 16: Aufweckeinheit
- 17: Aufweckbefehl
- 18: optischer Filter
- 19: Fotodiode
- 20: Schwellwertschaltung
- 21: optischer Energiesplitter

## Patentansprüche

1. Verfahren zum Betreiben eines, insbesondere optischen und/oder sternförmigen, Netzes, wobei das Netz eine zentrale Datenverteilungsstelle (10) umfasst, welche Datennutzsignale (14), insbesondere Datennutzpakete, an eine Vielzahl von Datenempfänger (11) übermittelt, wobei einzelne der Datennutzsignale (14) nur für einen definierten Teil der Datenempfänger (11) bestimmt sind, insbesondere für genau einen Datenempfänger (11) bestimmt sind,
wobei die Datenempfänger (11) wahlweise einen Empfangsmodus und einen Schlafmodus einnehmen können, wobei im Empfangsmodus der Empfang und die Verarbeitung von Datennutzsignalen (14) grundsätzlich möglich ist und im Schlafmodus der Empfang von Datennutzsignalen (14) oder die Verarbeitung empfangener Datennutzsignale (14) nicht möglich ist,
wobei einzelne Datenempfänger (11) durch ein datenempfängerspezifisches Aufwecksignal (15) veranlasst werden, vom Schlafmodus in den Empfangsmodus zu wechseln,
wobei das Aufwecksignal (15) ein optisches Signal ist, das von einer Aufweckanordnung (16) empfangen wird, die jeweils einem der Datenempfänger (11) zugeordnet ist,
**dadurch gekennzeichnet,**
**dass** nur für den Fall, dass das Aufwecksignal (15) für den zugehörigen Datenempfänger (11) bestimmt ist und der zugehörige Datenempfänger nicht im Empfangsmodus ist, folgende Schritte in angegebener Reihenfolge erfolgen:
- eine Filtereinheit (18) der Aufweckanordnung (16) gibt ein modifiziertes optisches Aufwecksignal (15m) aus, welches von einem lichtempfindlichen Sensor (19) der Aufweckanordnung (16) erkannt wird,
- die Aufweckanordnung gibt einen elektrischen oder elektronischen Aufweckbefehl (17) an den zugeordneten Datenempfänger (11) aus,
- veranlasst durch den Aufweckbefehl (17) wechselt der zugeordnete Datenempfänger (11) in den Empfangsmodus.

2. Verfahren nach dem vorherigen Anspruch,
**dadurch gekennzeichnet,**
**dass** die Filtereinheit (18) das modifizierte optische Aufwecksignal (15m) ohne den Einsatz von zusätzlicher externer Energie erzeugt.

3. Verfahren nach einem der vorherigen Ansprüche,
**dadurch gekennzeichnet,**
**dass** die zur Erzeugung des Aufweckbefehls (17) erforderliche Energie vollständig dem optischen modifizierten Aufwecksignal (15m) entnommen wird.

4. Verfahren nach einem der vorherigen Ansprüche,
**dadurch gekennzeichnet,**
**dass** die Filtereinheit (18) derjenigen Aufweckeinheit (16), die dem bestimmten Datenempfänger (11) des Aufwecksignals (15) zugeordnet ist, ein modifiziertes Aufwecksignal (15m) erzeugt, welches zumindest temporär eine höhere Amplitude aufweist als von anderen Filtereinheiten (16) modifizierte Aufwecksignale (15m) basierend auf demselben ursprünglichen Aufwecksignal (15), und
**dass** der lichtempfindlichen Sensor (19) auf die temporär höhere Amplitude des modifizierten Aufwecksignals (15m) konditioniert ist.

5. Verfahren nach einem der vorherigen Ansprüche,
**dadurch gekennzeichnet,**
**dass** das modifizierte Aufwecksignal (15m) temporär eine höhere Amplitude aufweist als das ursprüngliche Aufwecksignal (15), und
**dass** der lichtempfindlichen Sensor (19) auf die temporär höhere Amplitude des modifizierten Aufwecksignals (15m) konditioniert ist.

6. Verfahren nach einem der vorherigen Ansprüche,
**dadurch gekennzeichnet,**
**dass** die für unterschiedliche Datenempfänger (11) bestimmte einzelne Aufwecksignale (15) durch unterschiedliche Wellenlängen individualisiert werden, und dass die Filtereinheit (18) wellenlängenselektiv ausgebildet ist.

7. Verfahren nach dem vorherigen Anspruch,
**dadurch gekennzeichnet,**
**dass** die wellenlängenselektive Filtereinheit (18)
- einen Signalsplitter (21) und einen nachgelagerten Wellenlängenfilter, oder
- einen wellenlängenselektiven Splitter
aufweist.

8. Verfahren nach einem der vorherigen Ansprüche,
**dadurch gekennzeichnet,**
**dass** die Filtereinheit (18) ein Faser-Bragg-Gitter, insbesondere ein superstrukturiertes Faser-Bragg-Gitter, eine Verzögerungsstruktur (delay-lineinterferometer) oder optische Strukturen mit endlicher oder teilweise unendlicher Impulsantwort (FIR- bzw. IIR-Filter) umfasst.

9. Verfahren nach einem der vorherigen Ansprüche,
**dadurch gekennzeichnet,**
**dass** das für einen bestimmten Datenempfänger bestimmte Aufwecksignal (15) vor dem Versenden eines an den bestimmten Datenempfänger bestimmten Datennutzsignals (14) ausgesendet wird, und dass der anhand dieses Aufwecksignals (15) in den Empfangsmodus überführte Datenempfänger (11) unmittelbar nach dem Wechsel in den Empfangsmodus ein Datennutzsignal (14) empfängt und verarbeitet.

10. Verfahren nach einem der vorherigen Ansprüche,
**dadurch gekennzeichnet,**
**dass** das für einen bestimmten Datenempfänger bestimmte Aufwecksignal (15) zeitgleich zu einem Datennutzsignal (14) gesendet wird, welches zum Empfang durch einen anderen Datenempfänger vorgesehen ist.

11. Netz, insbesondere optisches Datennetz, welches mittels eines Verfahrens nach einem der vorherigen Ansprüche betrieben wird.

## Claims

1. A method for operating an, in particular optical and/or star-shaped network, wherein the network comprises a central data distribution point (10), which transmits useful data signals (14), particularly useful data packets, to a multiplicity of data receivers (11), wherein several of the useful data signals (14) are only intended for a defined portion of the data receivers (11), particularly are intended for precisely one data receiver (11),
wherein the data receiver (11) can optionally assume a receiving mode and a sleep mode, wherein in the receiving mode, the reception and the processing of useful data signals (14) is fundamentally possible and in the sleep mode, the reception of useful data signals (14) or the processing of received useful data signals (14) is not possible,
wherein several data receivers (11) are induced by a data-receiver-specific wake-up signal (15) to change from the sleep mode to the receiving mode,
wherein the wake-up signal (15) is an optical signal which is received by a wake-up arrangement (16) which is assigned to one of the data receivers (11) in each case,
**characterised**
**in that** - only in the event that the wake-up signal (15) is intended for the assigned data receiver (11) and the assigned data receiver is not in receiving mode - the following steps take place in the specified sequence:
- a filter unit (18) of the wake-up arrangement (16) emits a modified optical wake-up signal (15m), which is detected by a light-sensitive sensor (19) of the wake-up arrangement (16),
- the wake-up arrangement emits an electrical or electronic wake-up command (17) to the assigned data receiver (11),
- induced by the wake-up command (17), the assigned data receiver (11) changes to the receiving mode.

2. The method according to the preceding claim,
**characterised**
**in that** the filter unit (18) generates the modified optical wake-up signal (15m) without the use of additional external energy.

3. The method according to one of the preceding claims,
**characterised**
**in that** the energy required for generating the wake-up command (17) is drawn in full from the optical modified wake-up signal (15m).

4. The method according to one of the preceding claims,
**characterised**
**in that** the filter unit (18) of the wake-up unit (16) which is assigned to the particular data receiver (11) of the wake-up signal (15), generates a modified wake-up signal (15m), which at least temporarily has a higher amplitude than wake-up signals (15m) modified by other filter units (16) based on the same original wake-up signal (15), and in that the light-sensitive sensor (19) is conditioned to the temporarily higher amplitude of the modified wake-up signal (15m).

5. The method according to one of the preceding claims,
**characterised**
**in that** the modified wake-up signal (15m) temporarily has a higher amplitude than the original wake-up signal (15), and
**in that** the light-sensitive sensor (19) is conditioned to the temporarily higher amplitude of the modified wake-up signal (15m).

6. The method according to one of the preceding claims,
**characterised**
**in that** the several wake-up signals (15) intended for different data receivers (11) are individualised by different wavelengths, and in that the filter unit (18) is constructed to be wavelength selective.

7. The method according to the preceding claim,
**characterised**
**in that** the wavelength-selective filter unit (18) has
- a signal splitter (21) and a downstream wavelength filter, or
- a wavelength-selective splitter.

8. The method according to one of the preceding claims,
**characterised**
**in that** the filter unit (18) comprises a fibre Bragg grating, particularly a superstructured fibre Bragg grating, a delay structure (delay-line interferometer) or optical structures with finite or somewhat infinite impulse response (FIR or IIR filters).

9. The method according to one of the preceding claims,
**characterised**
**in that** the wake-up signal (15) intended for a particular data receiver is emitted before the sending of a useful data signal (14) intended for the particular data receiver, and in that the data receiver (11) switched to receiving mode on the basis of this wake-up signal (15) receives and processes a useful data signal (14) directly after the change to the receiving mode.

10. The method according to one of the preceding claims,
**characterised**
**in that** the wake-up signal (15) intended for a particular data receiver is sent at the same time as a useful data signal (14), which is provided for reception by a different data receiver.

11. A network, particularly an optical data network, which is operated by means of a method according to one of the preceding claims.

## Revendications

1. Procédé d'utilisation d'un réseau, en particulier optique et/ou en forme d'étoile, le réseau comprenant un point central de répartition de données (10) qui transmet des signaux d'utilisation de données (14), en particulier des paquets d'utilisations de données, à une multitude de récepteurs de données (11), certains des signaux d'utilisation de données (14) n'étant destinés qu'à une partie définie des récepteurs de données (11), en particulier à précisément un récepteur de données (11),
dans lequel les récepteurs de données (11) peuvent adopter facultativement un mode de réception et un mode de sommeil, sachant que, en mode de réception, la réception et le traitement des signaux d'utilisation de données (14) sont en principe possible et que, en mode de sommeil, la réception des signaux d'utilisation de données (14) ou le traitement de signaux d'utilisation de données reçues (14) ne sont pas possibles,
dans lequel certains récepteurs de données (11) sont amenés par un signal de réveil spécifique au récepteur de données (15) à passer du mode de de sommeil au mode de réception,
le signal de réveil (15) étant un signal optique qui est reçu par un dispositif de réveil (16) qui est respectivement associé à un des récepteurs de données (11),
**caractérisé en ce que**,
seulement dans le cas où le signal de réveil (15) est destiné au récepteur de données correspondant (11) et où le récepteur de données correspondant n'est pas en mode de réception, les étapes suivantes ont lieu dans l'ordre indiqué :
- une unité de filtrage (18) du dispositif de réveil (16) émet un signal de réveil optique modifié (15m) qui est reconnu par un capteur photosensible (19) du dispositif de réveil (16),
- le dispositif de réveil émet un ordre de réveil électrique ou électronique (17) en direction du récepteur de données associé (11),
- suite à l'ordre de réveil (17), le récepteur de données associé (11) passe en mode de réception.

2. Procédé selon la revendication précédente,
**caractérisé en ce que**
l'unité de filtrage (18) génère le signal de réveil optique modifié (15m) sans l'intervention d'énergie externe supplémentaire.

3. Procédé selon une des revendications précédentes,
**caractérisé en ce que**
l'énergie nécessaire à la génération de l'ordre de réveil (17) est prélevée totalement dans le signal de réveil optique modifié (15m).

4. Procédé selon une des revendications précédentes,
**caractérisé en ce que**
l'unité de filtrage (18) de l'unité de réveil (16) qui est associée au certain récepteur de données (11) du signal de réveil (15) génère un signal de réveil modifié (15m) qui présente du moins temporairement une amplitude plus élevée que les signaux de réveil (15m) modifiés par d'autres unités de filtrage (16) en se basant sur le même signal de réveil d'origine (15), et que le capteur photosensible (19) est conditionné à l'amplitude temporairement plus élevée du signal de réveil modifié (15m).

5. Procédé selon une des revendications précédentes,
**caractérisé en ce que**
le signal de réveil modifié (15m) présente temporairement une amplitude plus élevée que le signal de réveil d'origine (15) et
que le capteur photosensible (19) est conditionné à l'amplitude temporairement plus élevée du signal de réveil modifié (15m).

6. Procédé selon une des revendications précédentes,
**caractérisé en ce que**
les certains signaux de réveil (15) destinés à différents récepteurs de données (11) sont individualisés par des longueurs d'ondes différentes et que l'unité de filtrage (18) est sélective de longueur d'onde.

7. Procédé selon la revendication précédente,
**caractérisé en ce que**
l'unité de filtrage sélectif de longueur d'onde (18) présente
- un fractionneur de signaux (21) et un filtre de longueur d'onde installé en aval, ou
- un fractionneur sélectif de longueur d'ondes.

8. Procédé selon une des revendications précédentes,
**caractérisé en ce que**
l'unité de filtrage comprend (18) un réseau de Bragg à fibres, en particulier un réseau de Bragg à fibres superstructuré, une structure de retardement (delay-line-interferometer) ou des structures optiques à réponse par impulsion infinie ou partiellement infinie (filtre FIR ou IIR).

9. Procédé selon une des revendications précédentes,
**caractérisé en ce que**
le signal de réveil destiné à un certain récepteur de données (15) est envoyé avant l'envoi d'un signal d'utilisation de données destiné au certain récepteur de données (14) et que le récepteur de données (11) passé en mode de réception sur la base de ce signal de réveil (15) reçoit et traite un signal d'utilisation de données (14) immédiatement après être passé en mode de réception.

10. Procédé selon une des revendications précédentes,
**caractérisé en ce que**,
le signal de réveil destiné à un certain récepteur de données (15) est en même temps envoyé pour devenir un signal d'utilisation de données (14) qui est prévu pour être reçu par un autre récepteur de données.

11. Réseau, en particulier réseau de données optique, qui est utilisé au moyen d'un procédé selon une des revendications précédentes.
